# EUROPEAN PATENT APPLICATION

(11) **EP 4 779 285 A1**
(43) Date of publication of application: **22.07.2026**
(21) Application number: 25223272.3
(22) Date of filing: 15.12.2025
(51) Int. Cl.: G01M 15/02, F01D 25/28, G01M 15/14, G01M 99/00

(54) **A CLIMATIC TEST CONDITIONING APPARATUS, SYSTEM AND METHOD**

(30) Priority: 15.01.2025 US 202519022304
(71) Applicant: Rolls-Royce plc, London N1 9FX (GB); Rolls-Royce Deutschland Ltd & Co KG, 15827 Blankenfelde-Mahlow (DE); Rolls-Royce North American Technologies, Inc., Indianapolis, IN 46241 (US)
(72) Inventor: Marengo, Giovanni, Derby, DE24 8BJ (GB); Remmert, Ariane, Derby, DE24 8BJ (GB); dos Santos Ramos Lopes e Paiva, Ricardo Miguel, Derby, DE24 8BJ (GB); Kimmerle, Maria, 15827 Blankenfelde-Mahlow (DE); Peter, Jeffrey, Indianapolis, IN 46131 (US)
(74) Representative: Rolls-Royce plc

(57) **Abstract**

A climatic test conditioning apparatus (100) for conditioning a gas turbine engine (10) for climatic testing comprises a base (110) and an inflatable wall (120) connected to the base (110). The inflatable wall (120) has at least one port for at least partial inflation and deflation of the inflatable wall (120). The at least partially inflated inflatable wall (120) and base (110) define a volume (140) that envelopes the gas turbine engine (10). Also disclosed is a system and method for climatic test conditioning a gas turbine engine (10).

## Description

### FIELD OF THE DISCLOSURE

This disclosure relates to a climatic test conditioning apparatus, system and method. More specifically, it relates to a climatic test conditioning apparatus, system and method for conducting a cold start test, such as an Engine Certification standard test, on a gas turbine engine.

### BACKGROUND

To ensure a suitable level of passenger safety, aerospace gas turbine engines are required to demonstrate that they satisfy defined Engine Certification and Aircraft Certification standards.

As part of this, gas turbine engines may be required to demonstrate acceptable engine behaviour over a range of different climatic conditions (for example, different ambient weather temperatures, different degrees of precipitation etc).

Acceptable cold start behaviour may be demonstrated by engine testing. Cold start behaviour may be demonstrated for temperatures significantly below zero degrees Celsius, for example, at temperatures of approximately -40 degrees Celsius.

Although cold start engine testing can be performed in a suitably cold ambient environment, it may be more logistically convenient to test at a test site that has a higher ambient temperature than the required test condition, with the engine cooled to the required temperature for the test.

In this case, test conditioning equipment is required to enable the required cold conditions to be reached. As this equipment relates to conditioning for a climatic test, this equipment may also be referred to as "climatic test conditioning equipment".

### SUMMARY

According to a first aspect, there is disclosed a climatic test conditioning apparatus for conditioning a gas turbine engine for climatic testing. The climatic test conditioning apparatus has a base and an inflatable wall connected to the base. The inflatable wall has at least one port for at least partial inflation and deflation of the inflatable wall. The at least partially inflated inflatable wall and base define a volume which envelops the gas turbine engine.

The inflatable wall may comprise at least one aperture, the aperture configured to deliver a supply of cooling fluid to the volume. At least one flexible conduit for transporting cooling fluid may be connected to the aperture within the volume. Alternatively or additionally, at least one baffle panel may be provided within the volume. The cooling fluid may be chilled air. The cooling fluid may be chilled dehumidified air.

The inflatable wall may comprise a stacked plurality of inflatable annular rings. Each annular ring may comprise at least one port for inflation and deflation of that inflatable annular ring. Each of the stacked plurality of inflatable annular rings may be independently inflatable and deflatable.

The inflatable wall may comprise at least one deflation valve.

The test conditioning apparatus may comprise at least one guide configured to control a trajectory of deflation of the inflatable wall.

When at least partially inflated, a top portion of the inflatable wall may be configured to form at least a partial seal with a test stand mounting the gas turbine engine.

The base may be inflatable and may comprises at least one port for inflation and deflation of the base.

The climatic test conditioning apparatus may comprise polyamide reinforced polyethylene.

According to a second aspect, there is disclosed a system for climatic test conditioning a gas turbine engine. The system comprises a test stand to which a gas turbine engine is mounted via a mounting arrangement; a climatic test conditioning apparatus according to the first aspect; an air pressure source for at least partially inflating the inflatable wall; a cooling fluid supply for supplying a cooling fluid (such as chilled and dehumidified air) to a volume of the climatic test conditioning apparatus; and a temperature measurement means for determining when a climatic test condition threshold is reached.

The test stand may comprise a platform that forms a roof of volume with at least a partial seal formed between the platform and a top portion of an inflatable wall of the climatic test conditioning apparatus.

The platform may comprise a U-shaped or C-shaped track section. The at least partial seal may be formed by deformation of an interfacing portion of the inflatable wall such that it deforms to adopt the cross-sectional shape of the track cross-section of the platform.

According to a third aspect, there is disclosed a method of climatic test conditioning a gas turbine engine. The method comprises locating a climatic test conditioning apparatus such that a footprint of the climatic test conditioning apparatus surrounds the gas turbine engine. The climatic test conditioning apparatus is then inflated to form a volume that envelops the gas turbine engine. Cooling fluid, such as chilled dehumidified air is supplied to the volume with the supply of cooling fluid to the volume suspended upon determination of at least one temperature of the gas turbine engine crossing a threshold temperature. The climatic test conditioning apparatus is then at least partially deflated such that the volume no longer envelops the gas turbine engine and secured.

### BRIEF DESCRIPTION OF THE DRAWINGS

Embodiments will now be described by way of example only with reference to the accompanying drawings, in which:
**FIG. 1** shows an example gas turbine engine;
**FIG.2A** shows an example climatic test conditioning apparatus in side view;
**FIG. 2B** shows an example climatic test conditioning apparatus in plan view;
**FIG. 3A** shows an example interface between an inflatable wall and test stand;
**FIG. 3B** shows another example interface between an inflatable wall and test stand;
**FIG. 3C** shows another example interface between an inflatable wall and test stand;
**FIG. 3D** shows another example interface between an inflatable wall and test stand;
**FIG. 4A** shows an example inflatable wall when inflated;
**FIG. 4B** shows the example inflatable wall of FIG.4B when partially deflated;
**FIG. 5A** shows another example inflatable wall when inflated;
**FIG. 5B** shows another example inflatable wall when partially deflated;
**FIG. 6A** shows an example cooling arrangement;
**FIG. 6B** shows another example cooling arrangement; and
**FIG. 7** shows an example method of test conditioning.

### DETAILED DESCRIPTION

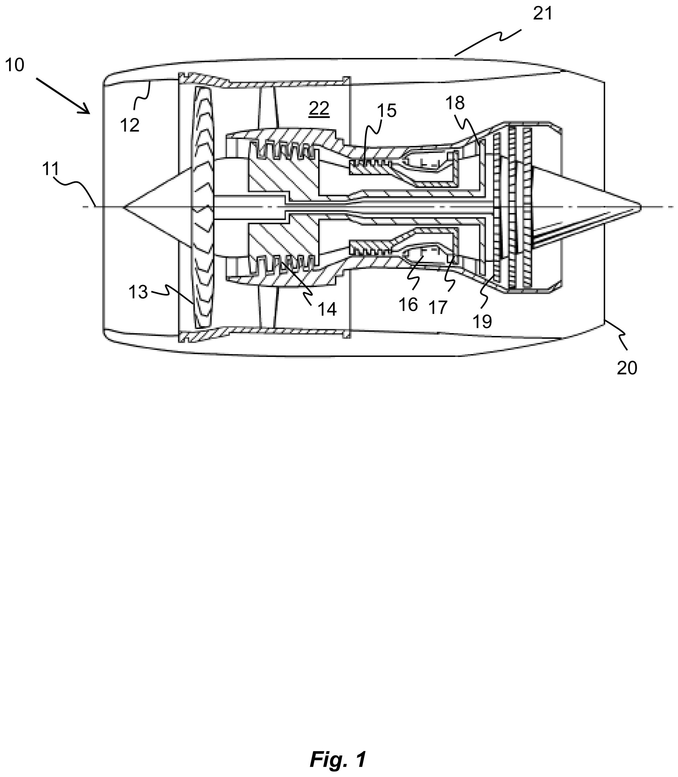

With reference to **FIG. 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Gas turbine engines may be operated in a wide range of different climatic conditions. It is therefore at least desirable to demonstrate that a gas turbine operates in a satisfactory manner over a range of conditions it will likely experience in service. Indeed, demonstrating compliance to a set of pre-defined test conditions may be essential if usage of the gas turbine engine is to be Certified by a regulatory authority such as the European Union Aviation Safety Agency (EASA) or the Federal Aviation Administration (FAA).

As one aspect of Certification, these regulatory authorities require that a gas turbine engine passes an engine cold start requirement (as a form of climatic test), with engine verification against this requirement typically demonstrated by conducting a series of engine cold start tests. In these tests, the gas turbine engine is cold-soaked down to a low temperature (for example, approximately -40 degrees Celsius) before the engine is started to idle, and, in some cases, subsequently accelerated to power.

Although these cold start tests can be performed in a cold ambient environment, it is often logistically more convenient to conduct these tests at a test site at a higher ambient temperature, using test equipment to cool the engine to the required cold-soak temperature.

Typically, a climatic test conditioning apparatus, such as a rigid, insulated container, is used to envelop the engine such that the engine is contained within a volume defined by the test conditioning apparatus. A cooling fluid is then introduced into the volume to cool and cold soak the engine to the required test temperature. The equipment may be referred to as "climatic test conditioning equipment" because the equipment conditions (i.e., prepares) the engine for a forthcoming climatic test (i.e., the cold-start test).

The test conditioning equipment (climatic test conditioning equipment) enables a more efficient and rapid cooling of the gas turbine engine to the test condition, as it reduces the dispersion of the cooling fluid away from the engine whilst also providing some degree of thermal insulation between the cooling engine and the wider atmospheric environment.

Once the gas turbine engine has reached the required test temperature, the test apparatus may be at least partially removed from the test cell to enable the test to be conducted.

It is desirable to be able to remove the test conditioning equipment quickly and easily from the test cell in which the test is to be conducted. Similarly, it is desirable to be able to easily store the test conditioning equipment between tests.

This is difficult if the test conditioning equipment is a rigid, insulated box, and becomes more difficult as the thrust of the gas turbine engine increases and/or the bypass ratio of the gas turbine engine increases. This is because increases in these parameters increase the size of the gas turbine engine, in turn increasing the size and weight of the test conditioning equipment required to accommodate the gas turbine engine within it. For example, the Rolls-Royce Trent XWB has a fan diameter of 118 inches (3m), while the Rolls-Royce UltraFan (Registered Trademark) demonstrator has a fan diameter of 140 inches (3.56m). Test conditioning equipment capable of accommodating these engines therefore has a characteristic dimension of several meters and is heavy, both factors impeding the ease with which it may be removed from the test cell.

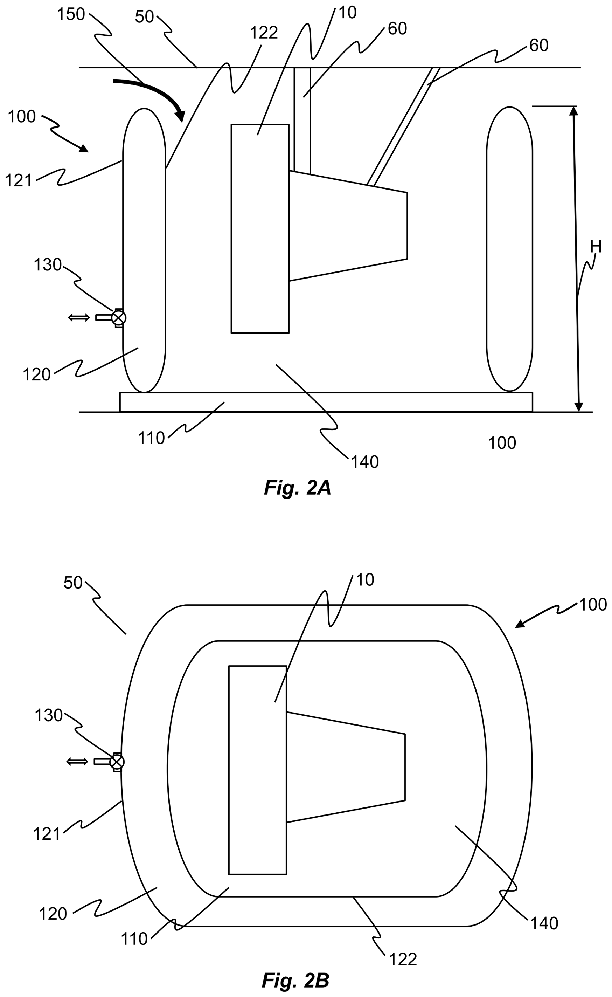

**FIGS 2A** and **2B** provides an illustration of an alternative example climatic test conditioning apparatus 100. The alternative climatic test conditioning equipment shown is proportionately lightweight, and therefore easier to handle within a test cell than traditional climatic test conditioning equipment. This makes removal and storage of the equipment easier than more traditional test conditioning equipment.

The climatic test conditioning apparatus 100 comprises a base 110 which acts as a floor for the apparatus 100, and an inflatable wall (in the form of a single annular inflatable ring) 120 that is connected to the base 110 to form a seal between the two. The inflatable wall 120 comprises at least one port 130 for inflating and deflating the inflatable wall 120. In some embodiments, port 130 may comprise an isolation valve. In other embodiments the isolation valve may be remote from port 130, or no isolation valve may be present. For example, the inflatable wall may remain inflated due to continuous operation of a fan, providing a supply of compressed air to the inflatable wall 120 via the at least one port 130.

When inflated, the inflatable wall 120 defines a volume 140 that is suitable for accommodating a gas turbine engine 10, i.e., it envelops the gas turbine engine. Using an inflatable structure may be desirable because it produces a lighter structure than conventional (rigid) test equipment, whilst air within the inflated inflatable wall thermally insulates the volume 140 to be cooled from the exterior environment, such as the test cell in which the cold start engine test is to be conducted.

When deflated, the space envelope occupied by the inflatable wall 110 is significantly reduced, enabling easier storage.

The base 110 may be rigid or flexible. In some examples, base 110 may be inflatable.

In examples in which base 110 is rigid, the base may comprise a perimetric channel (i.e., a continuous channel in a loop that is at or proximal to a perimeter of the base) in which the inflatable wall may be stored when deflated. A cover, for example, a rigid cover may be provided to cover and protect the deflated inflatable wall for storage. The cover may be load-bearing.

As for the inflatable wall, using an inflatable base may be desirable as it results in a lighter-weight structure with good insulating properties that may be more easily stored when not required.

The material or materials selected for the inflatable elements of the test conditioning device (inflatable wall, and in some examples, inflatable base) should be resistant to air leakage. Similarly, the material or materials should be repairable (for example, patchable in the event or ripping), and should remain flexible when exposed to cooling fluid 150. The material or materials should also be both mechanically robust and resistant to chemical attack from chemicals that may be present in the test cell. For example, hydraulic fluids and gas turbine engine oils are known to chemically attack some materials. The material or materials selected for the inflatable elements of the test conditioning device should therefore be resistant to chemical attack from these fluids.

Suitable materials for the test apparatus include polyamide reinforced polyethylene fabric. Nylon is an example of a suitable polyamide.

In FIGS 2A and 2B, the gas turbine engine 10 to be tested is mounted to a test stand 50 within a test cell (not shown) by a mounting arrangement 60. The base 110 of the climatic test conditioning apparatus 100 is positioned below the gas turbine engine 10, and has a footprint (i.e., a perimeter) that surrounds the gas turbine engine 10 when viewed in plan view (FIG 2B). As the plan view of FIG 2B shows, both the outer perimeter surface 121 of the inflatable wall 120 and the inner perimeter surface 122 of the inflatable wall 120 surround gas turbine engine 10. The footprint of the base 110 and inflatable wall 120 may have any suitable shape, for example, rectangular, circular, elliptical, trapezoidal etc. (Note that in FIG 2B, features of mounting arrangement 60 are omitted for ease of reference)

As FIG. 2A illustrates, once inflated, inflatable wall 120 has a height H such that the top of the inflatable wall 120 is above an uppermost portion of gas turbine engine 10. Thus, the combination of the inner perimeter surface 122 of inflatable wall 120 and the base 110 define a volume 140 that envelops (surrounds) the gas turbine engine 10 when it is installed on test stand 50.

Once the climatic test conditioning apparatus has been inflated, a cooling fluid 150 is introduced into volume 140 containing gas turbine engine 10. A suitable cooling fluid is chilled air or chilled dehumidified air.

As the cooling fluid 150 has a higher density than a density of air at the atmospheric temperature of the test bed, the cooling fluid settles within volume 140. The climatic test conditioning apparatus 100 therefore acts as a bund for the cooling fluid 150.

The cooling fluid 150 may be introduced into volume 140 in several different ways. For example, in the example of FIG. 2A, cooling fluid 150 is introduced via a gap between the top of inflatable wall 120 and test stand 50.

Alternatively or additionally, inflatable wall 120 may comprise at least one aperture (not shown in FIGS 2A and 2B) that connects volume 140 to a cooling fluid supply. The at least one aperture is therefore configured to deliver a supply of cooling fluid 150 to the volume 140.

In some examples, there may be at least two apertures in the inflatable wall 120.

If so, at least one of the apertures may deliver a supply of cooling fluid 150 to volume 140, while the remaining apertures may remove cooling fluid 150 from volume 140. The cooling fluid supply aperture(s) and the cooling fluid removal aperture(s) may be at opposing portions of volume 140, for example, in opposing portions of the inflatable wall 120. This may be desirable because a through-flow of cooling fluid 150 through volume 140, and around gas turbine engine 10, is promoted, providing a more uniform cooling of the gas turbine engine 10.

Other alternatives are also possible. For example, test stand 50 may comprise at least one aperture for supplying cooling fluid 150 to volume 140 from above, while either base 110 or inflatable wall 120 may comprise at least one aperture for removing cooling fluid 150 from below etc.

In some examples, flow direction features may be provided within volume 140 to direct cooling fluid 150 towards specific portions of the volume, and as a consequence, specific portions of a gas turbine engine 10 enclosed within volume 140. These flow direction features, if present, may form part of the inflatable wall, may form part of the base, or may be releasably connectable to at least one of the inflatable wall 120 and / or base 110. Releasable connections may be made by any suitable means. For example, a repeating hook and eyelet system such as Velcro (Registered Trademark) may be used.

Examples of flow direction features include baffle panels and flexible conduits. The baffle panels and / or flexible conduits may be configured to work in unison with the at least one aperture delivering the supply of cooling fluid to volume 140.

For example, baffle panels may be placed in the flow path of cooling fluid entering volume 140 via the at least one aperture such that the flow path is disrupted and distributed within the volume 140 to provide a more uniform cooling.

For example, a flexible conduit may be connected to the at least one aperture at its first end and routed such that the cooling flow is discharged at its second end into a sub-volume of volume 140. The second end of the flexible conduit may be placed into or proximal to the air intake 12 of the gas turbine engine 10. This may be desirable as it may enable a more rapid cooling of the gas turbine engine 10. In some examples, the flexible conduit may additionally comprise a plurality of supply holes along its length. The supply holes supply a portion of cooling fluid 150 into different zones (i.e., sub-volumes) of volume 140, thereby promoting a more uniform cooling within volume 140.

Although FIG. 2A shows a gap between the top of the inflatable wall 120 and the bottom of test stand 50, in some examples, the top of inflatable wall 120 may abut part of the test stand 50. An example of such a part is a platform, above the gas turbine engine mounting arrangement 60, which extends laterally to have a platform footprint that is at least as extensive as the footprint of the climatic test conditioning apparatus 100.

In these cases, the platform of the test stand may form a roof to volume 140. Abutment between the inflatable wall 120 and test stand 50 may be desirable because the abutment forms at least a partial seal between the two, whilst as the gas turbine engine 10 is fully enclosed (enveloped) within volume 140, leakage of cooling fluid from volume 140 is reduced and faster cooling is promoted.

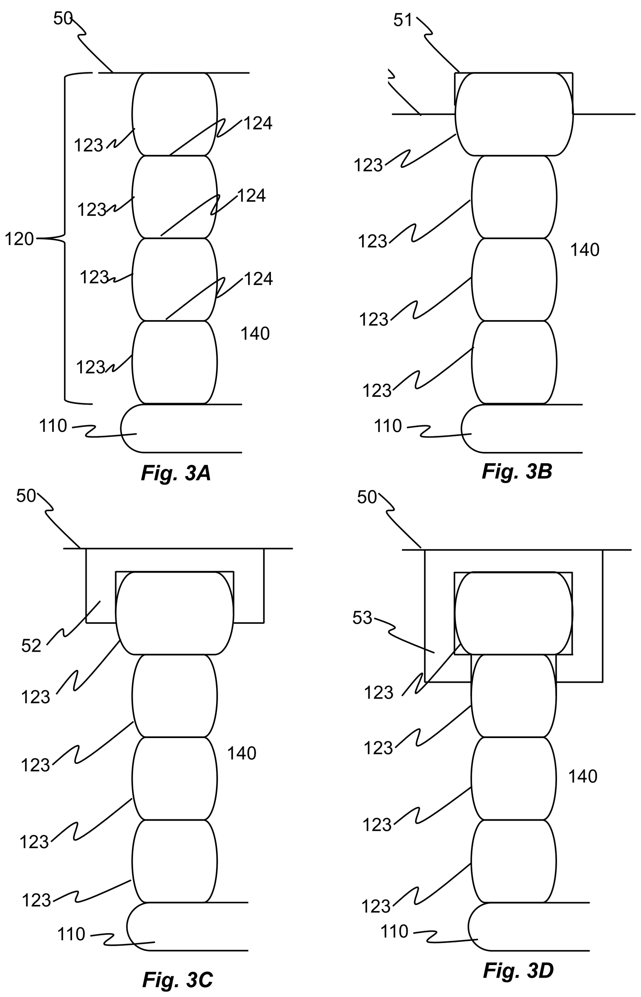

**FIGS. 3A to 3D** illustrates several different means by which at least a partial seal may be formed between inflatable wall 120 and the platform of test stand 50.

In FIG. 3A, the top of the inflatable wall abuts a substantially planar portion of the test stand (for example, a platform) to form the at least partial seal.

In FIG. 3B the test stand incorporates a continuous groove 51 as a form of continuous track section, dimensioned to be compatible with the top portion of the inflatable wall such that the top portion of the inflatable wall lies within the groove.

FIG. 3C illustrates a similar concept to FIG. 3B, but in this case a continuous U-section track 52 is connected to the platform of test stand 50, with the top portion of the wall sitting within the U-section track.

FIG. 3D illustrates a further concept. In FIG. 3D a continuous C-section track 53 is connected to the test stand platform. The track of FIG. 3D has a C-section because an aperture width of the lower portion of the track is smaller than a higher portion of the track.

It will be appreciated that the U-section track 52 and /or C-section track 53 may alternatively not be connected to the test stand platform but are instead integrated within it.

Equally, other cross-sectional track sections are possible, for example, triangular, trapezoidal, curved etc. At least a partial seal will be formed between the track and inflatable wall if there is contact between the two, and ideally, the interfacing portion of the inflatable wall deforms to adopt the cross-sectional shape of the track cross-section.

A further difference between FIG. 2 and FIGS. 3A to 3D is that in FIGS 3A to 3D the inflatable wall 120 is not a single annular inflatable ring, but instead comprises a stacked plurality of separate inflatable annular rings 123. Each separate inflatable annular ring 123 is conjoined with at least one other adjacent inflatable annular ring 123 in the stack at an interface surface 124 (only shown in FIG. 3A for clarity). Although these FIGS. illustrate four stacked inflatable rings 123, it will be appreciated that the any suitable number of stacked inflatable rings greater than 2 may be used.

Adjacent rings locate each other laterally via interface surface 124 (i.e., in a plane perpendicular to the height H of the inflatable wall 120). Each separate inflatable annular ring may comprise a port (not shown), permitting each ring to be inflated or deflated independently of other rings.

Independent inflation or deflation may be advantageous.

For example, for test conditioning smaller gas turbine engines, a smaller volume 140 comprising a reduced height inflatable wall 120 may be preferable as it reduces cooling an unnecessarily large volume 140. This may be accomplished by preferentially inflating upper rings 123 and not inflating lower rings 123 of inflatable wall 120. Thus, one size of climatic test conditioning apparatus 100 may be used for differently-sized gas turbine engines, with the volume 140 set based upon the size of the engine 10. Inflating only a subset of the total number of rings (i.e., upper rings, but not lower rings) may be referred to as partial inflation.

Sequential independent inflation or deflation may also provide greater control in respectively forming or collapsing the overall inflatable wall. A specific benefit of this is observed in relation to the C-section track 53 of FIG. 3B to FIG. 3D, and in particular, to FIG. 3D.

Sequential inflation, for example, by inflating lower rings 123 before upper rings 123, enables the height of the inflatable wall to increase in a controlled manner. For example, in the case of FIG. 3D, the lower rings 123 may be fully inflated before the uppermost ring 123, which will be located inside the C-section track 53 once inflated.

Prior to inflating the uppermost ring, the deflated uppermost ring lies beneath, but proximal to, the C-section track. During inflation, as the uppermost ring is still flexible, it will expand through the aperture width of the lower portion of the C-section and continue to expand to occupy the C-section channel. Once inflated within the C-section track 53, an interference fit is formed between the uppermost ring 123 and C-section track, forming an effective seal between the wall 120 and the test stand 50 (see FIG. 3D).

To enhance sealing, a sealant, such as an expanding foam sealant, may be also applied to any visible gaps between the uppermost ring 123 and track. The sealant may be applied by a person. A "cherry-picker" type boom-platform may be required for the person to get sufficient access to apply the sealant, depending upon the height H of the inflatable wall 120.

Deflation may be the reverse process of inflation. i.e., uppermost ring 123 is deflated first, breaking the seal between the inflatable wall 120 and the test stand 50. Once the seal has been broken, lower sections 123 of the inflatable wall 120 may be deflated, lowering the top of the wall away from test stand 50.

Whilst deflating the inflatable wall 120, it is desirable to control deflation of the inflatable wall 120 such that the deflated inflatable wall lies within the footprint occupied by the inflated inflatable wall.

In other words, it is desirable to control deflation to prevent the inflatable wall falling to one side of base 110. This is desirable because if the deflated wall falls to one side of the base such that a portion of the deflated overhangs an edge of base 110, the deflated wall would either lie partially on a floor of the test cell or, in example in which the test conditioning equipment is mounted on an elevated platform relative to the test cell floor, the deflating or deflated test conditioning equipment may fall from the elevated platform.

It will be appreciated that these scenarios also increase the probability that test conditioning equipment is damaged during deflation and / or increase the difficulty in quickly removing the test conditioning equipment from the test cell.

At least one guide may therefore be provided to control a trajectory of deflation. Equally, the at least one guide may alternatively be used to control a trajectory of inflation.

The at least one guide may take any suitable form. For example, the at least one guide may comprise a rigid frame proximal to either outer perimeter surface 121 or inner perimeter surface 122 of inflatable wall 120. In this case, the at least one guide comprises at least one guide rod, extending from base 110. Portions of the inflatable wall 120 comprise tabs (not shown) comprising eyelets (not shown) through which the at least one guide rod passes. Thus, as the inflatable wall is inflated and deflated, the eyelets of the tabs of the inflatable wall slide along the at least one guide rod.

The orientation of the at least one guide rod therefore substantially determines the direction of the trajectory of inflation and / or deflation of inflatable wall 120. For example, if the at least one guide rod is orientated in a substantially vertical direction, then the inflatable wall 120 will inflate and / or deflate in a substantially vertical direction, mitigating the risk that a portion of the deflated inflatable wall will lie outside the perimeter of the test condition equipment once inflated.

In some circumstances though (for example, for ease of storage), it may be desirable not to have a rigid guide, but for the guide to instead be flexible.

For example, the at least one guide may comprise at least one elastic cord, such as bungee cord. The at least one elastic cord may be made of any suitable material - i.e., a material that is elastic and is not damaged by cooling fluid 150 or materials such as engine oil or hydraulic fluid that may be present within the test cell environment. The at least one elastic cord may also be configured such that it is replaceable relative to other parts of the climatic test conditioning apparatus.

In these examples, the at least one elastic cord is positioned relative to the inflatable wall 20 such that it is increasingly tensioned as the inflatable wall 120 is inflated. When the inflatable wall is deflated the at least one cord may be slack (I.e., not tensioned). Once inflated, the inflatable wall provides an equal and opposite resistive force to counteract the tension in the at least one elastic cord. However, once the inflatable wall begins to deflate, as a stiffness of the inflatable wall 120 falls, the inflatable wall is no longer able to provide this equal and opposite resistive force.

To release its tension, the at least one elastic cord moves the portion of the inflatable wall it is in contact with (mechanically attached to or overlaying) in a direction to reduce a length of the tensioned (stretched) elastic cord. Thus, by specifying the locations of the contact points of the bungee cord, it is possible to guide the direction of initial deflation of the inflatable wall in a desired direction. For example, the inflatable wall 120 may be guided to deflate inwards, into volume 140. Once suitably guided, the inflatable wall may continue to collapse under its own weight in the desired direction.

The at least one elastic cord may be in the form of a loop, in contact with the outer perimeter wall of the inflatable wall. In particular, the elastic cord may be contacting an upper portion of the outer perimeter of the inflatable wall, such as the uppermost inflatable ring of an inflatable wall comprising a plurality of inflatable rings arranged in a stack.

Alternatively, the at least one elastic cord may not be in the form of a loop but may instead have a first end and a second end. The first end is connected to a first attachment point on the inflatable wall, while the second end is connected to a second attachment point on the climatic test conditioning apparatus (for example, on the inflatable wall or the base) that is laterally offset (horizontally offset) from the first attachment point. Thus, the at least one elastic cord guides opposing portions of the inflatable wall to deflate towards and into volume 140 as the inflatable wall deflates.

Alternatively or additionally, it may be desirable for the inflatable wall to deflate in a symmetrical manner as this may reduce the space envelope required for subsequent storage. This may be achieved by using pairs of elastic cords, in which an orientation of the first and second elastic cords of the pair are reflections of each other about a vertical plane of symmetry of the test conditioning apparatus.

The at least one elastic cord may be arranged to contact either the outer perimeter or inner perimeter of the inflatable wall 120. Contacting the outer perimeter may be preferable though as in this arrangement, the elastic cord is not in contact with the cooling fluid 150.

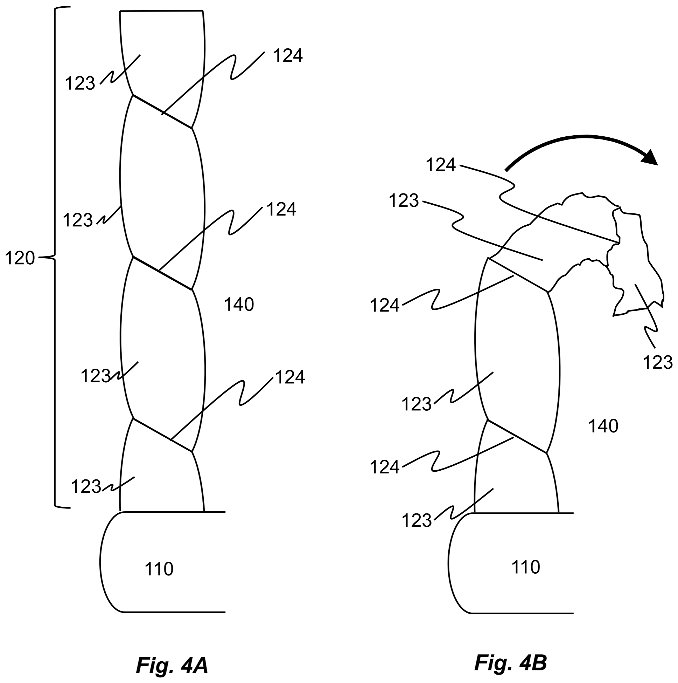

Another form of guide is illustrated in FIGS 4A and 4B. These FIGS show a cross-section through an inflatable wall 120, which like FIGS 3A - 3D, comprises a stacked plurality of separate inflatable annular rings 123.

**FIG.4A** shows the inflatable wall 120 in its inflated state.

**FIG. 4B** show the same inflatable wall 120 in a partially deflated state, in which the top two rings in the stack have been deflated and the bottom two rings remain inflated. FIG. 4B therefore represents an intermediate stage in the deflation of the inflatable wall 120.

Like in FIGS 3A - 3D, FIGS 4A and 4B show that adjacent inflatable rings 123 in the stack are connected to each other at interface surfaces 124. However, unlike FIGS 3A - 3D which show that interface surfaces 124 lie in a substantially horizontal plane, FIG 4A shows that when a ring 123 beneath an interface surface 124 is inflated, the interface surface 124 is inclined to the horizontal. An advantage of this is shown in FIG. 4B in which the inclined interface surface 124 below a deflating inflatable ring 123 causes that ring to collapse in a direction beyond the lower edge of the inclined surface. Thus, inclined interface surfaces 124 may guide the direction of initial deflation of the inflatable wall in a desired direction. For example, the inflatable wall 120 may be guided to deflate inwards, into volume 140.

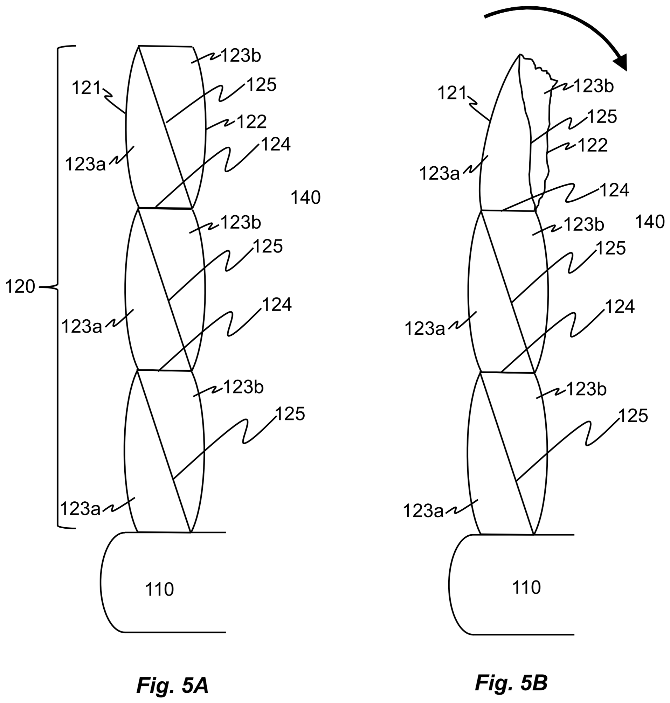

Other alternatives and additions are also envisaged. For example, **FIGS. 5A** and **5B** illustrate how an inflatable ring 123 may be sub-divided by a partition 125 into a first ring portion 123a and a second ring portion 123b, each to one side of partition 125. In these examples, the partition is internal to the inflatable ring and joins an upper surface of the ring 123 to a lower surface of the ring 123. The partition 125 is made from a flexible material and may be made from the same material as other portions of the inflatable ring. For example, the partition may be made from polyamide reinforced polyethylene. The first ring portion 123a and the second ring portion 123b are concentric portions of inflatable ring 123.

In some examples, the partition is impervious to fluids such as air, in that the first ring portion 123a is separate from the second ring portion 123b, with each portion 123a, 123b being independently inflatable and deflatable.

In other examples, the partition 125 may comprise openings (not shown) such that there is a fluidic connection between the first ring portion 123a and the second ring portion 123b.

When the inflatable ring 123 is being deflated, deflation is controlled such that one of the first ring portion 123a and the second ring portion 123b deflates more rapidly than the other (for example, if partition 125 comprises openings and deflation of the ring 123 occurs only via a port in one of the first ring portion 123a or the second ring portion 123b) or sequentially (for example, if partition 125 is impervious to air, with inflation and deflation of the separated ring portions 123a, 123b being independently controlled). During deflation, the stiffnesses of the outer perimeter surface 121 and the inner perimeter surface 122 may differ, promoting the ring to collapse in a desired direction.

For example, in FIG 5B, for the uppermost inflatable ring 123, the degree of deflation of second ring portion 123b is greater than the degree of deflation of first ring portion 123a, reducing the stiffness of inner perimeter surface 122 relative to outer perimeter surface 121. This promotes the collapse of the ring 123 in a desired direction, into volume 140.

Incorporation of partition 125 may also have other benefits. For example, as the partition inhibits a recirculation of air within the inflatable ring 123 from the outer perimeter surface 121 to the inner perimeter surface 122, incorporation of the partition also inhibits heat transfer across inflatable ring 123. This may enable a thickness of the ring (i.e., a distance separating outer perimeter surface 121 from inner perimeter surface 122) to be reduced, in turn reducing the mass of the ring and increasing the rate at which it may deflate.

It may also be desirable to incorporate additional features to enable a more rapid deflation of the inflatable wall, and hence a faster removal of the climatic test conditioning apparatus 100 from the test cell.

For example, the climatic test conditioning apparatus 100 may comprise at least one deflation valve (not shown). The at least one deflation valve is closed whilst it is required that the inflatable wall be inflated and to remain inflated and is opened when it is required to deflate the inflatable wall 120. Opening the at least one deflation valve increases the effective flow area for exhausting this compressed air relative to the effective flow area of port 130, permitting a more rapid deflation.

From the above disclosure, it will be understood that the above climatic test conditioning apparatus forms part of a system for climatic test conditioning. A system for climatic test conditioning may also be referred to as "climatic test conditioning equipment" as the "equipment" comprises not only the climatic test conditioning apparatus, but also comprises other components, such as a source of cooling fluid etc.

Other aspects of the system and apparatus are now disclosed in more detail.

### Means of Inflation and Deflation

The inflatable elements (inflatable wall, and optionally, inflatable base) of the climatic test conditioning apparatus may be inflated by any suitable air pressure source.

Although it is possible to inflate the inflatable elements from a shop-air supply (a compressed air supply, having a compressed air reservoir), this may not desirable due to the volume of gas required and the likely high pressure differential between the supply pressure of the shop-air supply and the lower required inflation pressure of the inflatable elements. In a worst case, this could lead to an inadvertent overpressure and subsequent rupture of the inflatable elements during inflation.

Instead, a lower pressure source, such as a fan may be used to inflate the inflatable elements. Depending upon whether an isolation valve is fitted it may be necessary to continually run the fan to maintain inflation of the inflatable elements of the climatic test conditioning apparatus.

If an isolation valve is not fitted, the inflatable elements of the climatic test conditioning apparatus may be deflated by deactivating the fan.

If a more rapid deflation, or a more complete deflation (for example, for storage purposes), is required then the following possibilities are also envisaged: -

A rotational direction of the fan may be reversed.

A pitch angle of blades of the fan may be reversed whilst maintaining the same fan rotational direction.

Port 130 may be disconnected from an exit from the fan, and instead connected to an inlet to the fan. Running the fan in this configuration will now extract air from the inflatable elements.

### Cooling Supply

Although many different fluids may be used for cooling fluid 150, it is desirable that the cooling fluid be non-toxic (as leakage of the cooling fluid may occur into the test cell) and that any remaining traces of the cooling fluid that are present in the test cell upon commencement of the engine cold start test do not influence the test results.

Chilled air, (preferably dehumidified chilled air to avoid frost or ice formation within volume 140) is therefore a suitable cooling fluid.

Preferably, the cooling fluid may be cooled via a heat-exchanger using a refrigerant operating in a closed loop circuit. Ammonia is an example of a suitable refrigerant for this closed loop refrigeration circuit.

Operating the refrigerant in a closed loop circuit may be beneficial because loss of the refrigerant to the atmosphere is prevented. This has both environmental benefits and logistical benefits. For example, as an alternative to a closed loop refrigerated cycle, a cold fluid such as liquid nitrogen could cool the engine cooling fluid to the required temperature, before being discharged into the atmosphere.

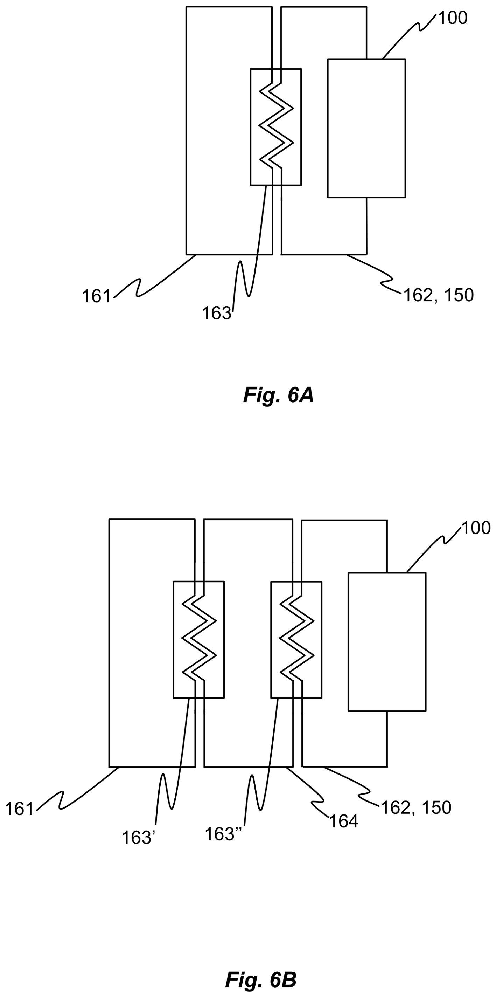

Example cooling arrangements are shown in **FIGS. 6A** and **6B****.**

FIG. 6A illustrates a single heat-exchanger arrangement in which a refrigeration circuit 161 interfaces with a cooling fluid circuit 162 comprising cooling fluid 150 via a heat exchanger 163. It will be appreciated that details of the refrigeration circuit 161 and cooling fluid circuit 162, such as pumps etc have been omitted for ease of understanding.

FIG. 6B shows an alternative arrangement utilising a pair of heat exchangers 163', 163". Like the example of FIG6A, a closed loop refrigeration circuit 161 is used to cool a closed-loop cooling fluid circuit 162 that comprises a dehumidified cooling fluid 150. However, FIG. 6B differs from FIG.6A in that heat is not exchanged directly between the refrigerant (e.g. ammonia) and the cooling fluid 150, but rather an intermediate heat transfer circuit, re-circulating a heat transfer fluid 164 through the pair of heat exchangers 163', 163" is used. Example heat transfer fluids include Dynalene HF-LO. It will be appreciated that details of the refrigeration circuit 161, cooling fluid circuit 162 and intermediate heat transfer circuit, such as pumps etc have been omitted for ease of understanding.

In some examples, it may also be desirable to cool oil or hydraulic fluid that will be recirculated by the gas turbine engine when running. Test conditioning in preparation for a cold start test may therefore additionally comprise at least one of an engine oil cooling circuit and / or a hydraulic fluid cooling circuit.

As the gas turbine engine is not running during test conditioning, the existing on-engine oil pump and / or hydraulic pumps cannot be used to recirculate engine oil or hydraulic fluid to enable these fluids to be cooled before test. Instead, a valve arrangement may be used to isolate the gas turbine engine from an engine oil cooling circuit and/or a hydraulic fluid cooling circuit, with each of these circuits equipped with its own recirculation pump. These circuits may interface with either the above closed loop refrigeration circuit 161 or the above intermediate heat transfer circuit to obtain their cooling source. Alternatively, a different cooling source may be used, if required.

Ensuring that the engine oil and/or hydraulic fluid is also cold-soaked to a same or similar temperature to the cooling fluid 150 may be desirable because it ensures that gear systems (for example, on-engine gearboxes, pumps etc) are tested at representative conditions as a viscosity of pumped fluids typically increases as their temperature decreases, increasing the input power (and torque) required to drive these systems.

### Determining Test Conditions have been reached

A temperature of the cooling fluid 150 inside volume 140 may be monitored by any suitable means - for example, by thermocouple. Alternatively or additionally, a temperature of at least a portion of gas turbine engine 10 may be measured by the temperature measurement means. For example, an oil temperature within a gearbox of a gas turbine engine 10 may be measured; a temperature of a structural component (e.g., an engine casing etc.) may be measured etc. These measurements may also be made by thermocouples.

Once it is determined that the gas turbine engine 10 has reached the required test temperature (i.e., at least one threshold temperature, and possibly several threshold temperatures relating to different measurement locations on or in gas turbine engine 10 have been reached), the test conditioning apparatus100 is removed from the test cell comprising the test stand.

### Movement of the Climatic test conditioning apparatus

Although not shown in the FIGS, if base 110 of the test apparatus is rigid or semirigid, wheels or rollers may be attached to base 110, to enable easier movement of the climatic test conditioning apparatus.

Similarly, although not shown in FIG. 2A or 2B, the test apparatus may comprise at least one attachment point (for example, grab handles, towing eye etc) to assist a team of people and / or vehicle to enable easier movement of the climatic test conditioning apparatus.

Although features such as wheels, rollers, and/or attachment points increase the ease of moving the climatic test conditioning apparatus, ease of movement still decreases as the size of the climatic test conditioning apparatus increases.

Additionally, in order to avoid aerodynamic interactions with the floor of a test cell, when tested, a large gas turbine engine such as a Rolls-Royce Trent XWB may be suspended from a test stand 50 such that the lowest portion of the engine is several meters above the test cell floor. The required minimum suspended height may also increase with engine size.

Hence, for a large gas turbine engine 10, if the base 110 rests upon the floor of the test cell whilst the inflatable wall 120 has a height H such that a volume 140 that surrounds engine 10 is formed, a lower portion of this volume may represent an empty space not containing any portion of the engine, but into which cooling fluid pools. Reducing this dead volume is desirable for both more energy efficient and timely cooling of the engine and reducing the size and weight of the inflatable wall, and hence the size and weight of the climatic test conditioning apparatus.

These problems may be mitigated by mounting the base 110 on an elevating platform such as a scissor lift platform. The elevating platform form part of the test cell or may be mobile and removable from the test cell.

Use of an elevating platform may also be desirable because lowering the elevating platform lowers the uppermost portion of the wall relative to the engine to be tested, aiding a faster removal of the climatic test conditioning apparatus.

Despite these features, it may still be difficult to remove the deflated climatic test conditioning apparatus from the test cell within the available time period. In these circumstances, it may alternatively be desirable to secure the deflated climatic test conditioning apparatus within the test cell such that it remains within the test cell whilst the engine is started. For example, a net, such as a cargo net may be placed over the deflated climatic test conditioning apparatus, with the net secured (anchored) in position by tensioning straps attached at one end to the net and at their other end to a securing feature in the test cell. An example of such a securing feature is a shackle connected to the test cell floor.

### Method

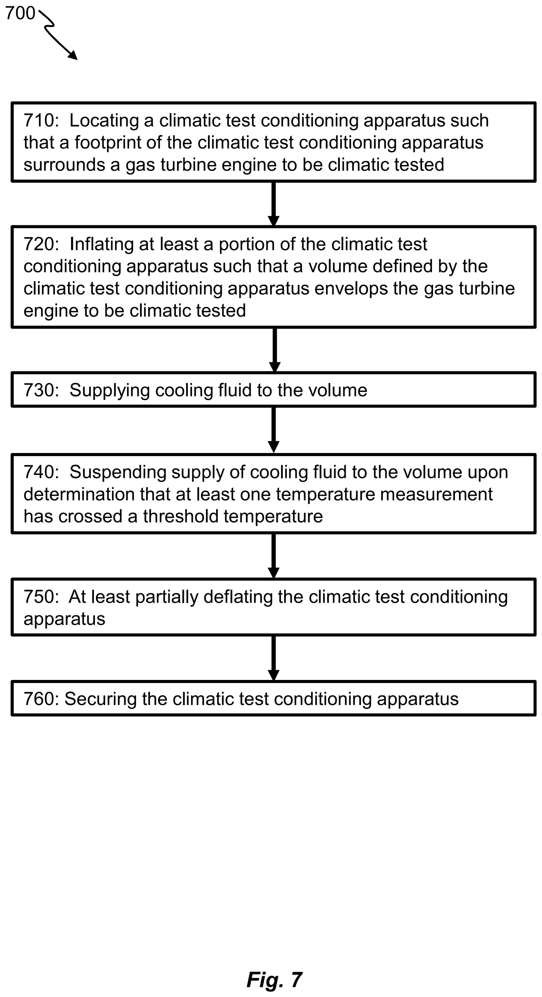

A method 700 of test conditioning a gas turbine engine is also disclosed. This is also shown in **FIG. 7****.**

In step 710, a climatic test conditioning apparatus is located such that a footprint of the apparatus surrounds the gas turbine engine to be climatic tested. The climatic test conditioning apparatus may be as disclosed above. Optionally, the climatic test conditioning apparatus may be placed on an elevating platform and elevated towards the gas turbine engine to be conditioned for test.

In step 720, at least a portion of the climatic test conditioning apparatus is inflated to form a volume that envelops the gas turbine engine 10. The volume is defined by the at least partially inflated climatic test conditioning apparatus, i.e., a height of an at least partially inflatable wall of the climatic test conditioning apparatus that surrounds the gas turbine engine. Various forms of at least partial inflation are envisaged. For example, the climatic test conditioning apparatus may comprise an inflatable wall and an inflatable base, both of which are fully inflated; the climatic test conditioning apparatus may comprise an inflatable wall and a non-inflatable (rigid) base. Similarly, the inflatable wall of the climatic test conditioning apparatus may comprise a stacked plurality of inflatable rings, the inflatable rings may be inflated independently. Depending upon the desired wall height H, only a subset of inflatable rings may be inflated. Inflatable rings of inflatable wall 120 may be inflated sequentially. Some of the inflatable rings, for example lower rings in the stack, may not be inflated in dependence upon a required height of the inflatable wall.

In step 730, cooling fluid (e.g., dehumidified chilled air) is supplied to volume 140. Optionally, fluids of systems of the gas turbine engine (for example, engine oil and/or hydraulic fluid) may be simultaneously cooled. The cooling fluid may be recirculated and rechilled via an arrangement of heat-exchangers.

Supply of the cooling fluid is continued until it is suspended based upon in step 740 it is determined that at least one temperature measurement of the gas turbine engine crossing a threshold temperature. Optionally, supply of the cooling fluid is suspended once a plurality of temperatures of the gas turbine engine cross a threshold (for example, a temperature of a structure of the gas turbine engine (e.g., a gearbox), an oil temperature, a hydraulic fluid temperature etc).

In step 750, the climatic test conditioning apparatus is then at least partially deflated. If the inflatable wall of the climatic test conditioning apparatus comprises a stacked plurality of inflatable rings, the plurality of inflated inflatable rings may be deflated sequentially. For example an upper (e.g., an uppermost) inflatable ring may be deflated first. Optionally, if the climatic test conditioning apparatus is placed on an elevating platform in an elevated configuration, the elevated platform may be lowered simultaneously with deflation. Optionally, a rate of deflation of the climatic test conditioning apparatus may be increased by at least one of opening at least one deflation valve, by reversing a blade pitch of a fan configured to inflate the climatic test conditioning apparatus, by reversing a rotational direction of the fan configured to inflate the climatic test conditioning apparatus etc.

Once sufficiently deflated, the deflated climatic test conditioning apparatus is secured in step 760. The climatic test conditioning apparatus may be secured in-situ (for example, by securing an anchored net over the deflated climatic test conditioning apparatus, the net being anchored to a plurality of fixed mounting points within the test cell). Alternatively, the climatic test conditioning apparatus may be secured by removing the climatic test conditioning apparatus from the vicinity of the test (e.g., the test cell). Wheels or rollers etc. may be provided on the climatic test conditioning apparatus or elevating platform (if present) for easier removal.

The climatic test (for example, a gas turbine cold start test) may now be conducted.

It will be appreciated that although the above disclosure relates to climatic test conditioning (apparatus, system, method) for a cold start test for a gas turbine engine, the above apparatus, method and system is also applicable for climatic test conditioning any machine for testing at a temperature colder than the ambient temperature of the test cell or test site. For example, the above apparatus, method and system may be is suitable for climatic test conditioning a land-vehicle such as an automobile, a motorcycle, a truck, a digger, a tractor etc.

In these examples, it will be appreciated that several modifications relative to test conditioning a gas turbine engine may be made without deviating from the scope of the above disclosure.

For example, a suspended mounting arrangement 60 is not required for test conditioning a land-based vehicle, as in these examples, a rigid, load-bearing base may support the weight of the land-based vehicle. The rigid base may be wheeled, such that it functions as a trailer on which the land-based vehicle may be transported, if so desired. In these examples, thermal insulation, for example in the form of an inflatable portion of the base, may be provided beneath an upper, rigid portion of the base to enable more efficient cooling of the land-vehicle to the required test conditions.

In these examples, storing the deflated inflatable wall in a perimetric channel of the base, covered by a protective cover may be desirable because it enables the land-vehicle to be moved on or off the base without damaging the inflatable wall.

Once in position, i.e., the land-vehicle is surrounded by the deflated inflatable wall, the inflatable wall may be inflated, and test-conditioning commenced as previously disclosed.

Optionally, an insulated roof panel, for example, and inflatable roof panel, may be connected to the top of the inflated inflatable wall.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A climatic test conditioning apparatus (100) for conditioning a gas turbine engine (10) for climatic testing, the climatic test conditioning apparatus (100) comprising:
a base (110); and
an inflatable wall (120) connected to the base (110), the inflatable wall (120) comprising at least one port (130) for at least partial inflation and deflation of the inflatable wall (120);
wherein the at least partially inflated inflatable wall (120) and the base (110) define a volume (140) enveloping the gas turbine engine (10).

2. **The** climatic test conditioning apparatus (100) of claim 1, wherein the inflatable wall (120) comprises at least one aperture, the aperture configured to deliver a supply of cooling fluid (150) to the volume (140).

3. The climatic test conditioning apparatus (100) of claim 1 or 2, wherein the inflatable wall (120) comprises a stacked plurality of inflatable annular rings (123), wherein each annular ring (123) comprises at least one port for inflation and deflation of that inflatable annular ring (123).

4. The climatic test conditioning apparatus (100) of claim 3, wherein each of the stacked plurality of inflatable annular rings (123) is independently inflatable and deflatable.

5. The climatic test conditioning apparatus (100) of any of claims 2 to 4, wherein at least one flexible conduit for transporting cooling fluid (150) within the volume (140) is connected to the at least one aperture.

6. The climatic test conditioning apparatus (100) of any preceding claim, wherein the inflatable wall (120) comprises at least one deflation valve.

7. The climatic test conditioning apparatus (100) of any preceding claim, wherein the climatic test conditioning apparatus has at least one guide configured to control a trajectory of deflation of the inflatable wall.

8. The climatic test conditioning apparatus (100) of any preceding claim, wherein the base (110) is inflatable and has at least one port for inflation and deflation of the base (110).

9. The climatic test conditioning apparatus (100) of any preceding claim, wherein when at least partially inflated, a top portion of inflatable wall (120) is configured to form at least a partial seal with a test stand (50) for mounting the gas turbine engine (10).

10. The climatic test conditioning apparatus (100) of any preceding claim, wherein the climatic test conditioning apparatus (100) comprises polyamide reinforced polyethylene.

11. A system for climatic test conditioning a gas turbine engine (10), the system comprising:
a test stand (50) for mounting the gas turbine engine (10);
a climatic test conditioning apparatus (100) comprising a base (110) and an inflatable wall (120) connected to the base (110), the inflatable wall (120) and base (110) defining a volume (140) enveloping the gas turbine engine (10);
an air pressure source for at least partially inflating the inflatable wall (120);
a cooling fluid supply for supplying a cooling fluid (150) to the volume (140); and
at least one temperature measurement means for determining when a climatic test condition threshold is reached.

12. The system of claim 11, wherein the test stand (50) comprises a platform that forms a roof of volume (140) and at least a partial seal is formed between the platform and a top portion of inflatable wall (120).

13. The system of claim 12, wherein the platform comprises a continuous track section (51, 52, 53) and the at least partial seal is formed by deformation of an interfacing portion of the inflatable wall (120) such that it deforms to adopt the cross-sectional shape of the continuous track section (51, 52, 53).

14. A method (700) of climatic test conditioning a gas turbine engine (10), the method (700) comprising the steps of:
locating a climatic test conditioning apparatus (100) such that a footprint of the climatic test conditioning apparatus (100) surrounds the gas turbine engine (10);
inflating the climatic test conditioning apparatus (100) to form a volume (140) that envelops the gas turbine engine (10);
supplying cooling fluid (150) to the volume (140);
suspending the supply of cooling fluid (150) to the volume (140) in determination of at least one temperature of the gas turbine engine (10) crossing a threshold temperature;
at least partially deflating the climatic test conditioning apparatus (100) such that the volume (140) no longer envelops the gas turbine engine (10); and
securing the at least partially deflated climatic test conditioning apparatus (100).
